# EUROPÄISCHE PATENTSCHRIFT

(11) **EP 1 084 082 B1**
(45) Veröffentlichungstag und Bekanntmachung des Hinweises auf die Patenterteilung: **10.04.2002**
(21) Anmeldenummer: 99920750.9
(22) Anmeldetag: 23.04.1999
(51) Int. Cl.: C02F 1/52, C02F 9/00

(54) **VERFAHREN ZUR REINIGUNG VON ABWÄSSERN AUS DER AGAR-AGAR PRODUKTION**
METHOD FOR CLEANING WASTE WATER FROM THE PRODUCTION OF AGAR-AGAR
PROCEDE D'EPURATION D'EAUX USEES PROVENANT DE LA PRODUCTION D'AGAR-AGAR

(30) Priorität: 30.04.1998 DE 19819281
(43) Veröffentlichungstag der Anmeldung: 21.03.2001
(73) Patentinhaber: Siemens Axiva GmbH & Co. KG, 65926 Frankfurt am Main (DE)
(72) Erfinder: RIEDERLE, Karl, D-65779 Kelkheim (DE); ZORN, Friedhelm, D-56370 Ebertshausen (DE); SIBARANI, Maruli, Jakarta Selatan 15419 (ID)
(86) Internationale Anmeldenummer: EP9902732
(87) Internationale Veröffentlichungsnummer: WO9957067

(56) Entgegenhaltungen:
- DE-A- 2 623 408
- US-A- 4 999 114
- US-A- 5 241 045
- PATENT ABSTRACTS OF JAPAN vol. 013, no. 419 (C-637), 18. September 1989 (1989-09-18) & JP 01 159098 A (CANON ELECTRON INC), 22. Juni 1989 (1989-06-22)

## Beschreibung

Die Erfindung betrifft ein Verfahren zur biologischen Reinigung von Abwässern enthaltend Polysaccharide, bei dem man das Abwasser einer Fällung unterzieht und anschließend in Gegenwart eines bakterienhaltigen Schlammes belüftet.

Agar-Agar ist ein gelbildendes Heteropolysaccharid aus der Zellwand von Rotalgen und wird unter anderem als Geliermittel verwendet. Bei der Gewinnung von Agar-Agar aus Seetang/Seegras fallen Abwässer an, die aufgrund der darin enthaltenen Polysaccharide biologisch schwer abbaubar sind. Die übliche Vorbehandlung mit Flockungs- und Fällungsmitteln wie Eisenchlorid, Eisensulfat oder Aluminiumchlorid bewirkt lediglich eine unzureichende Verbesserung der biologischen Abbaubarkeit.

Der Erfindung lag daher die Aufgabe zugrunde das eingangs genannte Verfahren zu verbessern.

Diese Aufgabe wird erfindungsgemäß dadurch gelöst, daß man zur Fällung Borsäure verwendet.

Gegenstand der Erfindung ist daher ein Verfahren zur biologischen Reinigung von Abwässern enthaltend Polysaccharide, bei dem man das Abwasser einer Fällung unterzieht und anschließend in Gegenwart eines bakterienhaltigen Schlammes belüftet, dadurch gekennzeichnet, daß man zur Fällung Borsäure verwendet.

Die Lösung der genannten Aufgabe ist insofern überraschend, als zwar aus der DE 2623408 A1 die Verwendung von Borsäure oder Borsäuresalzen zur Abscheidung von Polyvinylalkoholen (PVA), einer definierten chemischen Substanzgruppe, aus Abwasser bekannt ist, eine Übertragung dieser Verwendung auf Abwässer enthaltend Polysaccharide jedoch für den Fachmann nicht naheliegt, da die Abwasserinhaltsstoffe aus der Agar-Agar Produktion chemisch nicht eindeutig definiert sind und somit deren Zusammenwirken mit Borsäure nicht vorhersehbar ist.

Im Gegensatz dazu ist das physikalisch/chemische Zusammenwirken von PVA mit Borsäure für den Fachmann vorhersehbar. Zudem ist bekannt, daß andere, übliche Fällungsmittel wie Fe- oder Al-Salze bei PVA ähnlich gute Ergebnisse bringen wie Borsäure. Bei der Behandlung der Abwässer enthaltend Polysaccharide ergab jedoch eine Behandlung mit den üblichen Flockungs- oder Fällungsmitteln keine nennenswerte Verbesserung der biologischen Abbaubarkeit, woraus auf eine unzureichende Abscheidung der im Abwasser vorhandenen Polysaccharide geschlossen werden kann. Eine Vorreinigung der Abwässer durch Flockung/Fällung mit Borsäure schien daher wirkungslos hinsichtlich einer Entfernung von schwer abbaubaren Abwasserinhaltsstoffen.

Durch eine zufällige Einstellung des pH-Werts des Abwassers mit Borsäure vor der Zudosierung von Fällungsmittel (FeSO₄) verbesserte sich jedoch völlig überraschend das Abbauverhalten und die Filtrierbarkeit sowie die biologische Abbaubarkeit des Filtrats.

Im folgenden wird das erfindungsgemäße Verfahren näher beschrieben, ohne daß eine Beschränkung in irgendeiner Weise beabsichtigt ist.

In einer Vorbehandlungsstufe wird das Abwasser mit einem CSB (Chemischer Sauerstoffbedarf) im Bereich von 2000 - 6000 mg/l, das üblicherweise alkalisch vorliegt und einen pH-Wert von 10 bis 13 hat, zunächst mittels Flockung/Fällung vorbehandelt. Dazu wird der pH-Wert vorzugsweise mit Schwefelsäure auf einen Wert im Bereich von 3 bis 4 eingestellt. Anschließend wird Eisenchlorid (FeCl₃) und Borsäure in Form von verdünnten Lösungen zugegeben. Die Konzentration der FeCl₃. Lösung: 5-50, vorzugsweise 10 bis 40 Gew.-%, der Borsäurelösung: 1-10, vorzugsweise 2-5 Gew.-%. Das Gemisch wird gerührt, vorzugsweise zwischen 20 und 30 min, und der pH-Wert auf einen Wert im Bereich von 8 bis 10 angehoben. In diesem Bereich bilden sich voluminöse Fe(OH)₃ - Flocken, die sich zusammen mit den ausgefällten Bestandteilen des Abwassers am Behälterboden absetzen. Die Feststoffe werden vom Behälterboden abgezogen oder abfiltriert und das Dekantat bzw. Filtrat biologisch in bekannter Weise gereinigt. Die entnommenen Feststoffe werden entwässert und können deponiert oder verbrannt werden.

Das erfindungsgemäße Verfahren ist durch die Zugabe von Borsäure gekennzeichnet. Bosräure bildet offenbar mit Bestandteilen des Agar-Agar, möglicherweise mit Alginaten, Komplexe bzw. Gele und bewirkt vermutlich dadurch die unerwartet sprunghafte Verbesserung des Absetzverhaltens und der Filtrierbarkeit. Überraschenderweise erhöht sich auch die biologische Abbaubarkeit des Filtrats bzw. Dekantats signifikannt. In Versuchen ohne Borsäurezugabe waren die Feststoffe kaum abfiltrierbar und das Filtrat war trübe und schlecht biologisch abbaubar.

Die Vorteile des erfindungsgemäßen Verfahrens sind im wesentlichen darin zu sehen, daß sich das Absetzverhalten, die Filtrierbarkeit und die biologische Abbaubarkeit des Abwassers signifikannt erhöhen.

Im folgenden wird das erfindungsgemäße Verfahren anhand eines Vergleichsbeispiels und eines erfindungsgemäßen Versuchsbeispiels näher erläutert, ohne die Erfindung dadurch in irgend einer Weise zu beschränken.

### Vergleichsbeispiel:

500 ml eines Abwassers aus einer Agar-Agar Produktion mit einem CSB von 3800 mg/l und einem pH von 12,4 wurden durch Zugabe von Schwefelsäure auf einen pH von 3,5 eingestellt. Anschließend wurden 2 ml einer 40 %-igen FeCl3-Lsg zugegeben. Dadurch erniedrigte sich der pH-Wert auf 2,8. Mit NaOH wurde der pH dann auf einen Wert von 10,8 angehoben. Zur Verbesserung der Flockenbildung wurde noch 1 ml 0,2 %-ige Polyaluminiumchloridlösung (PAC-Lsg.) zudosiert. Nach der PAC-Zugabe wurde noch 2 min nachgerührt, dann wurde der Rührer abgestellt und die Flocken sedimentierten.

Es bildeten sich feine Flocken, die schlecht sedimentierten und der Überstand war trübe. Die sedimentierten Feststoffe wurden nach einer Absetzzeit von 6 h abfiltriet. Von dem Filtrat wurde eine CSB und BSB₅-Bestimmung (BSB = biologischer Sauerstoffbedarf) durchgeführt. Die Werte betrugen CSB = 2300 mg/l und BSB₅ = 50 mg/l. Das hohe CSB/BSB₅-Verhältnis bedeutet, daß die biologische Abbaubarkeit des Filtrats schlecht ist.

### Versuchsbeispiel:

500 ml des Originalabwassers aus dem Vergleichsbeispiel (CSB = 3800 mg/l; pH = 12,4) wurden durch Zugabe von Schwefelsäure auf pH = 3,0 eingestellt. Anschließend wurde das Abwasser mit 15 ml einer 2 %-igen Borsäurelösung und 2 ml einer 40 %-igen FeCl3-Lösung versetzt. Die Mischung wurde mit NaOH auf einen pH-Wert von 10,5 angehoben, anschließend wurde 1 ml einer 0,2 %-igen PAC-Lösucng zudosiert. Analog Beispiel 1 betrug die Nachrührzeit 2 min. Es bildeten sich mittelgroße Flocken, die nach Abstellen des Rührers sehr gut sedimentierten. Der Überstand war klar. Nach 6 h Absetzzeit wurde der Feststoff abfiltriert. Die Analyse ergab für das Filtrat einen CSB-Wert von 2000 mg/l, der BSB₅-Wert betrug 505 mg/l. Die biologische Abbaubarkeit des Filtrats ist damit deutlich besser als im Vergleichsbeispiel.

Ein Vergleich der in den Beispielen genannten CSB/BSB₅ - Verhältnisse zeigt, daß diese Werte ohne Zugabe von Borsäure wesentlich höher und die biologische Abbaubarkeit damit wesentlich schlechter ist.

## Patentansprüche

1. Verfahren zur biologischen Reinigung von Abwässern enthaltend Polysaccharide, bei dem man das Abwasser einer Fällung unterzieht und anschließend in Gegenwart eines bakterienhaltigen Schlammes belüftet, **dadurch gekennzeichnet, daß** man zur Fällung Borsäure verwendet.

2. Verfahren nach Anspruch 1, **dadurch gekennzeichnet, daß** man zur Fällung das Abwasser auf einen pH-Wert von 3 bis 4 bringt, Borsäure und Eisenchlorid zugibt und anschließend den pH-Wert auf 8 bis 10 anhebt.

3. Verfahren nach Anspruch 1 oder 2, **dadurch gekennzeichnet, daß** die Borsäure in wäßriger Lösung in einer Konzentration aus dem Bereich von 1 - 10, vorzugsweise 2 - 5 Gew.-% vorliegt.

4. Verfahren nach einem oder mehreren der Ansprüche 2 bis 3, **dadurch gekennzeichnet, daß** das Eisenchlorid in wäßriger Lösung in einer Konzentration aus dem Bereich von 5 - 50, vorzugsweise 10 - 40 Gew.-% vorliegt.

## Claims

1. A process for biological treatment of wastewaters containing polysaccharides by the wastewater being subjected to a coagulation and subsequently aerated in the presence of a bacterial sludge, which comprises effecting said coagulation using boric acid.

2. The process of claim 1, wherein said coagulation is effected by adjusting the wastewater to a pH of 3 to 4, adding boric acid and iron chloride and subsequently raising the pH to 8 - 10.

3. The process of claim 1 or 2, wherein boric acid is present in aqueous solution in a concentration in the range of 1 - 10%, preferably 2 - 5%, by weight.

4. The process of one or more of claims 2 to 3, wherein iron chloride is present in aqueous solution in a concentration in the range of 5 - 50%, preferably 10 - 40%, by weight.

## Revendications

1. Procédé d'épuration biologique d'eaux usées contenant des polysaccharides, dans lequel on fait précipiter les eaux usées et on les aère ensuite en présence d'une boue contenant des bactéries, **caractérisé en ce qu'**on utilise de l'acide borique pour la précipitation.

2. Procédé selon la revendication 1, **caractérisé en ce qu'**on amène pour la précipitation les eaux usées à une valeur de pH de 3 à 4, on ajoute de l'acide borique et du chlorure de fer et on élève ensuite la valeur de pH à 8 à 10.

3. Procédé selon la revendication 1 ou 2, **caractérisé en ce que** l'acide borique est présent en solution aqueuse en une concentration dans la gamme de 1-10, de préférence de 2-5 % en poids.

4. Procédé selon une ou plusieurs des revendications 2 à 3, **caractérisé en ce que** le chlorure de fer en solution aqueuse est présent dans une concentration dans la gamme de 5-50, de préférence de 10-40 % en poids.
